# EUROPÄISCHE PATENTANMELDUNG

(11) **EP 1 962 299 A2**
(43) Veröffentlichungstag der Anmeldung: **27.08.2008**
(21) Anmeldenummer: 08101502.6
(22) Anmeldetag: 12.02.2008
(51) Int. Cl.: H01F 7/08, F16K 31/06, H01F 7/127, H01F 7/128

(54) **Elektropneumatisches Patronenventil und Verfahren zur vereinfachten Herstellung eines solchen**

(30) Priorität: 23.02.2007 DE 102007009400
(71) Anmelder: Robert Bosch GmbH, 70469 Stuttgart (DE)
(72) Erfinder: Widera, Jörg, 70839, Gerlingen (DE)
(74) Vertreter: Kietzmann, Lutz

(57) **Zusammenfassung**

Elektropneumatisches Patronenventil mit einem äußere Anschlüsse (P, A, R) aufweisenden Ventilgehäuse (1) mindestens einem Ventilsitz (3a, 3b), der ein Verschlusselement (4) über eine elektromagnetische Spulenanordnung betätigt, umfassend eine elektrische Spule (5) mit Eisenkern (6), der mit einem mit dem Verschlusselement (4) in Verbindung stehenden Anker (7) zusammenwirkt, welcher über einen Luftspalt (10) von einem Flussleitblech (9) umgeben ist, wobei ferner der magnetische Fluss zum Eisenkern (6) hin über einen Rückflussmantel (8) geschlossen ist, wobei der Eisenkern (6) mit dem Rückflussmantel (8) verschweißt oder verklebt ist, wobei stirnseitig angeordnete elektrische Anschlusspins (12, 12b) der elektrischen Spule (5) den Eisenkern (6) isoliert durchdringend über eine Vergussmaße hieran befestigt sind.

## Beschreibung

Die vorliegende Erfindung betrifft ein elektropneumatisches Patronenventil mit einem äußere Anschlüsse aufweisenden Ventilgehäuse mit mindestens einem Ventilsitz, der ein Verschlusselement über eine elektromagnetische Spulenanordnung betätigt, umfassend eine elektrische Spule mit Eisenkern, der mit einem mit dem Verschlusselement in Verbindung stehenden Anker zusammenwirkt, der über einen Luftspalt von einem Flussleitblech umgeben ist, wobei der magnetische Fluss zum Eisenkern hin über einen Rückflussmantel geschlossen ist. Weiterhin betrifft die Erfindung auch ein Verfahren zur Herstellung eines solchen elektropneumatischen Patronenventils.

Das Einsatzgebiet von Patronenventilen der hier interessierenden Art erstreckt sich vornehmlich auf die pneumatische Vorsteuerung von Wegeventilen in Schieber- oder Sitzbauweise. Meist wird das Schaltelement derartiger Mehrwegeventile pneumatisch über einen Steuerdruck betätigt, welcher von einem elektropneumatischen Vorsteuerventil geschaltet wird. Da Patronenventile in ihrer Bauart sehr kompakt sind und sich als separate Baueinheit auch im Reparaturfall leicht austauschen lassen, werden diese häufig als Vorsteuerventile angesetzt. Darüber hinaus eignet sich der Erfindungsgegenstand auch als normales Schaltventil, das wegen seiner kompakten Gestalt beispielsweise direkt in den Endkappen eines Pneumatikzylinders zur Bildung einer Arbeitseinheit integrierbar ist.

Ein gattungsgemäßes elektropneumatisches Ventil geht aus der EP 1 577 595 A1 hervor. Das Ventil besitzt ein Ventilgehäuse mit im Innenbereich angeformten Ventilsitzen, welche interne Ventilkammern voneinander abgrenzen, die mit jeweils einem äußeren Anschluss in Verbindung stehen. Ein Betätigungselement schaltet durch Abheben oder Aufsetzen auf den Ventilsitz den Druckluftstrom durch das Ventilgehäuse. Diese Betätigung erfolgt elektromagnetisch über eine elektrische Spule, deren axial bewegbarer Anker mit dem Betätigungselement der Ventilsitze in mechanischer Verbindung steht. Zur Maximierung der elektromagnetisch erzeugten Schaltkraft ist die elektrische Spule von einem eisenmagnetischen Magnetflusskreis umgeben, welcher aus einem ortsfest gegenüber der Spule angeordneten festen Eisenkern, sowie einem hiermit in Verbindung stehenden und die elektrische Spule umgebenden Rückflussmantel, einem mit dem Rückflussmantel verbundenen und den Magnetflusskreis über einen Luftspalt zum beweglichen Anker hin schließenden Flussleitblech.

Nachteilig bei diesem Stand der Technik ist, dass durch konstruktionsbedingte Luftspalte bei den aneinandergereihten Bauteilen des Magnetflusskreises Magnetkraftverluste auftreten. Es sind eine Reihe von internen Abdichtungen über O-Ringe erforderlich, was die Anzahl der Bauteile insgesamt erhöht. Entsprechend aufwendig ist die Montage und ein Qualitätsrisiko besteht darin, dass während der Montage eventuell ein erforderlicher O-Ring zur Abdichtung vergessen wird, was die Funktionsfähigkeit des Ventils zumindest beeinträchtigt.

Es ist daher die Aufgabe der vorliegenden Erfindung ein elektropneumatisches Patronenventil der vorstehend bezeichneten Art dahingehend weiter zu verbessern, dass durch bauteilsparende Konstruktion eine einfache Montage gewährleistet ist, und dass Magnetkraftverluste minimiert werden.

Die Aufgabe wird ausgehend von einem elektropneumatischen Patronenventil gemäß dem Oberbegriff von Anspruch 1 in Verbindung mit dessen kennzeichnenden Merkmalen gelöst.

Die nachfolgenden abhängigen Ansprüche geben vorteilhafte Weiterbildungen der Erfindung wieder.

Die Erfindung schließt die technische Lehre ein, dass der Eisenkern des Magnetflusskreises mit dem benachbarten Rückflussmantel verschweißt oder verklebt ist, wobei stirnseitig angeordnete Anschlusspins der elektrischen Spule den Eisenkern isoliert durchdringend über eine Vergussmasse hieran befestigt sind.

Der Vorteil der erfindungsgemäßen Lösung liegt insbesondere darin, dass ein den Magnetfluss schwächender Luftspalt zwischen Rückflussmantel und Eisenkern vermieden wird. Die zum Anschluss der innenliegenden elektrischen Spule erforderlichen Anschlusspins sind den Magnetflusskreis nicht störend isoliert durch den Eisenkern hindurchgeführt. Die primär zur Abdichtung vorgesehene Vergussmasse dient gleichzeitig auch der Befestigung des Eisenkerns zumindest mit der Spule, so dass insgesamt eine stabile, fest gefügte Anordnung entsteht. Die erfindungsgemäße Lösung zeichnet sich weiterhin dadurch aus, dass eine interne Abdichtung durch O-Ringe nicht erforderlich ist, so dass diese der Dichtung dienenden Bauteile auch nicht während der Montage vergessen werden können.

Eine weitere die Montage verbessernde zusätzliche Maßnahme besteht darin, dass das aus Kunststoff bestehende Ventilgehäuse in den eisenmetallischen zylinderartigen Rückflussmantel eingepresst ist. Das Ventilgehäuse lässt sich aus Kunststoff besonders einfach herstellen, wobei sich die erforderlichen Ventilgehäuse internen Sitze, Kammern und Kanäle durch Spritzgießen leicht formen lassen. Materialbedingt besitzt das aus Kunststoff bestehende Ventilgehäuse gegenüber dem relativ härterem, eisenmetallischen Rückflussmantel eine Dichteigenschaft, so dass das Einpressen des Ventilgehäuses in den zylinderartigen Rückflussmantel bereits die erforderliche Dichtwirkung liefert.

Die Montage des Ventilgehäuses im Rückflussmantel kann dadurch erleichtert werden, dass letzterer über einen nach radial innen gerichteten Randbereich einen Anschlag für das hierin einzupressende Ventilgehäuse bildet, was eine automatisch korrekte relative Positionierung der beiden Bauteile sicherstellt.

Der durch den im Wesentlichen zylindrischen Innenraum der elektrischen Spule axial bewegbare Anker kann nach zwei bevorzugten Ausführungsformen zur Ausführung der Schaltbewegung gegenüber den ortsfesten Bauteilen geführt werden. Zum einen wird vorgeschlagen, den Anker in einen spindelartigen Spulenkörper der elektrischen Spule, welcher vorzugsweise aus Kunststoff besteht, axial zu führen. Alternativ hierzu ist es auch möglich, den Anker durch das Flussleitblech axial zu führen, welches sich in den Innenraum der elektrischen Spule hülsenförmig hinein erstreckt, um somit die erforderliche axiale Länge zur geeigneten Führung des Ankers zu bilden. Der Vorteil der letztgenannten Alternativ besteht darin, dass sich hierdurch der Luftspalt zwischen Flussleitblech und Anker signifikant reduzieren lässt, was einer Minimierung der Magnetkraftverluste zugute kommt.

Das erfindungsgemäß aufgebaute elektropneumatische Patronenventil lässt sich besonders einfach und sicher durch die Abfolge weniger Montageschritte herstellen, in dem zunächst in den topfförmigen Rückflussmantel das Ventilgehäuse mit Verschlusselement eingelegt oder einpresst wird, worüber das Flussleitblech eingelegt wird, worüber dann die elektrische Spule eingelegt wird. In den Innenraum der elektrischen Spule wird der Anker montiert, so dass dieser am Verschlusselement zur Anlage kommt. Auf dem Anker wird anschließend eine Rückstellfeder platziert, worüber als Deckel der feste Eisenkern in den topfförmigen Rückflussmantel eingelegt und durch Verschweißen oder Verkleben in erfindungsgemäßer Weise hieran befestigt wird.

Vorteilhaft bei diesem Montageverfahren ist, dass sich die Bauteile von einer Montagerichtung her nacheinander hinzufügen lassen, wobei separate O-Ringe als Dichtelemente nicht benötigt werden. Hieraus ergibt sich eine einfache Montage des erfindungsgemäßen elektropneumatischen Patronenventils.

Die Befestigung des als Deckel dienenden Eisenkerns des elektropneumatischen Patronenventils erfolgt vorzugsweise nach zwei Alternativen. Zum einen ist bevorzugt, die den Eisenkern isoliert durchdringenden Anschlusspins der elektrischen Spule im Bereich des Eisenkerns mit Vergussmasse abzudichten, wobei gleichzeitig der Eisenkern ringförmig innenseitig mit der elektrischen Spule verklebt wird. Bei dieser Alternative bietet es sich an, den Eisenkern mit dem Rückflussmantel zu verschweißen, was den Vorteil bietet, dass ein Luftspalt zwischen den Bauteilen gänzlich entfällt. Zum anderen kann der Eisenkern auch durch die Vergussmasse zusätzlich mit dem Rückflussmantel verklebt werden. Dies wird dadurch erreicht, dass der Eisenkern außenseitig von der Vergussmasse überdeckt wird. Somit stellt die erhärtete Vergussmasse einen dichtenden Abschluss nach außen her. Diese Alternative sollte bevorzugt werden, falls eine fertigungstechnisch besonders einfache Herstellung im Vordergrund stehen soll.

Die Vergussmasse wird gemäß einer weiteren die Erfindung verbessernde Maßnahme erst nach Justage des Ankerhubes über eine entsprechende Positionierung des Eisenkerns relativ zur elektrischen Spule hinzugefügt. Hierdurch wird eine Versiegelung der miteinander korrekt zu positionierenden Bauteile erreicht.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Seitenansicht eines elektropneumatischen Patronenventils in Längsschnitt einer ersten Ausführungsform,
- Figur 2: eine schematische Seitenansicht eines elektropneumatischen Patronenventils in Längsschnitt einer zweiten Ausführungsform, und
- Figur 3: eine schematisch perspektivische Außenansicht des montierten elektropneumatischen Patronenventils nach Figur 1.

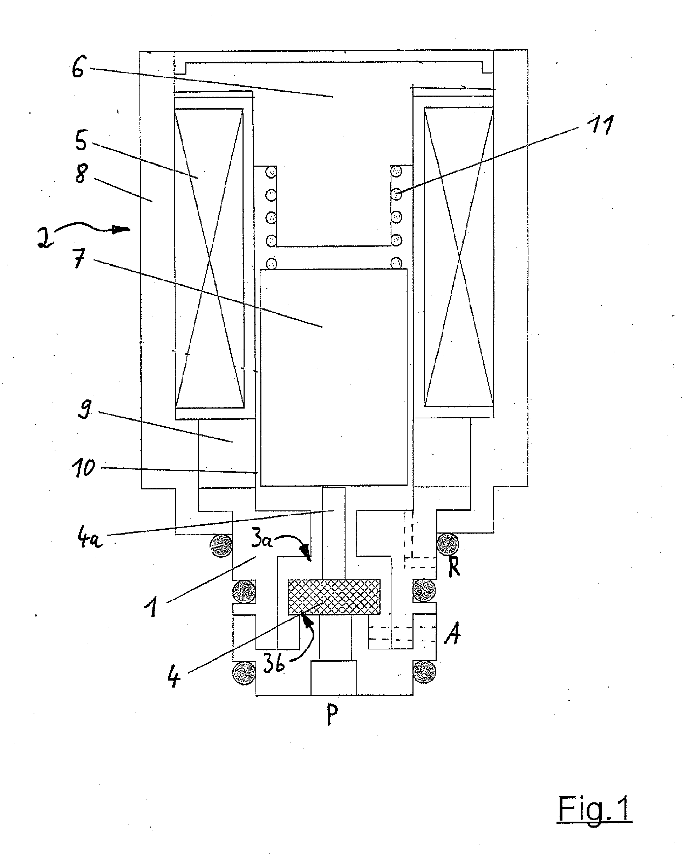

Gemäß Figur 1 besteht das Patronenventil mit 3/2-Ventilfunktion im Wesentlichen aus einem Ventilgehäuse 1, an dem die elektromagnetische Spulenanordnung 2 angebracht ist. Innerhalb des Ventilgehäuses 1 sind zwei gegenüberliegende Ventilsitze 3a und 3b angeordnet, die mit einem Betätigungselement 4 zum Schalten des Druckluftflusses zwischen den äußeren Anschlüssen P, A und R dienen. Das hier elastomere Verschlusselement 4 wird über die elektromagnetische Spulenanordnung 2 betätigt.

Die elektromagnetische Spulenanordnung 2 umfasst eine elektrische Spule 5 mit ortsfest dem gegenüber angeordneten Eisenkern 6. Der Eisenkern 6 korrespondiert mit einem mit dem Verschlusselement 4 in Verbindung stehenden bewegbaren Anker 7.

Der Eisenkern 6 und der bewegbare Anker 7 sind Bestandteile eines Magnetflusskreises, der weiterhin einen das Gehäuse der Spulenanordnung 2 bildenden eisenmetallischen Rückflussmantel 8 sowie einen hiermit im Bereich des beweglichen Ankers 7 in Kontakt stehenden Flussleitblech 9 umfasst. Um die Bewegbarkeit des Ankers 7 sicher zustellen, ist es erforderlich, zwischen dem Anker 7 und dem diesen umgebenen Flussleitblech 9 einen Luftspalt 10 belassen. Das Verschlusselement 4 kommt über einen Betätigungsstößel 4a stirnseitig am Anker 7 zur Anlage. Zwischen dem Eisenkern 6 und dem Anker 7 ist zur Aufbringung einer Rückstellkraft eine Rückstellfeder 11 vorgesehen. Die Rückstellfeder 11 nach Art einer Druckfeder ausgebildet.

Der Rückflussmantel 8 ist im Wesentlichen topfförmig ausgebildet und besitzt zur Aufnahme des Ventilgehäuses 1 einen nach radial innen gerichteten Randbereich, welcher einen Anschlag für das druckdicht hierin eingepresste Ventilgehäuse 1 aus Kunststoff bildet.

Nach Montage des Ventilgehäuses, des Flussleitbleches, der elektrischen Spule, des Ankers 7 mit Rückstellfeder 11 wird schließlich als Deckel der Eisenkern 6 in den topfförmigen Rückflussmantel 8 eingelegt und der Ankerhub durch entsprechende Lagepositionierung definiert. Anschließend wird der Eisenkern 6 in diesem Ausführungsbeispiel mit dem umliegenden Rückflussmantel 8 entlang des Umfangs dicht verschweißt. Die dem Eisenkern 6 isoliert durchdringenden - hier nicht erkennbaren - Anschlusspins der elektrischen Spule 5 werden anschließend im Bereich des Eisenkerns 6 mit einer Vergussmasse, beispielsweise Epoxidharz, abgedichtet, wobei die Vergussmasse auch weiterhin in den Innenbereich des Patronenventils gelangt, um gleichzeitig den Eisenkern 6 mit der elektrischen Spule 5 zu verkleben.

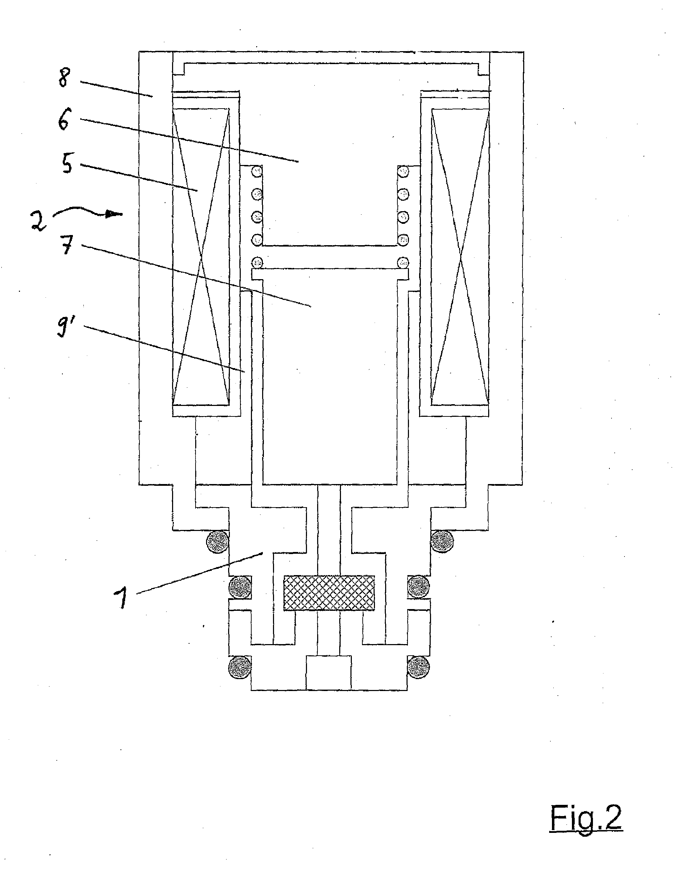

Gemäß der in Figur 2 dargestellten Ausführungsform wird im Unterschied zur vorstehend beschriebenen Ausführungsform Eisenkern 6 und Rückflussmantel 8 ebenfalls miteinander verklebt, wobei die hierfür verwendete Vergussmasse den Eisenkern 6 außenseitig überdeckt und gleichzeitig auch im Innenbereich des Patronenventils eine Verklebung des Eisenkerns 6 mit der elektrischen Spule 5 bewirkt.

Ferner ragt bei dieser Ausführungsform das Flussleitblech 9' hülsenförmig in den Innenraum der elektrischen Spule 5 hinein, um zwecks Minimierung des Luftspalts zum Anker 7 hin eine Führung des Ankers 7 entlang seiner Schaltbewegung zu gewährleisten.

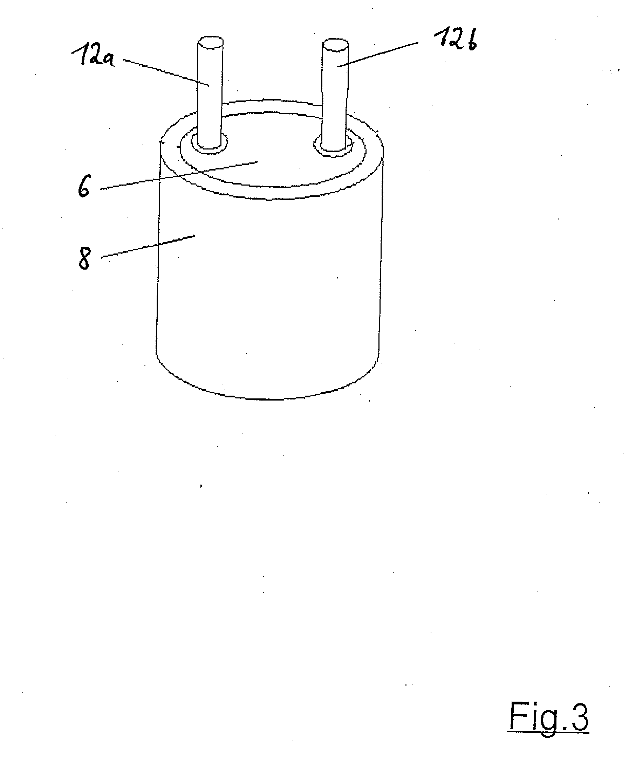

Nach Figur 3 ist der Rückflussmantel 8 des elektromagnetischen Patronenventils mit dem den Deckel bildenden Eisenkern 6 außenradial verschweißt, wogegen die elektrischen Anschlusspins 12a und 12b der - hier nicht erkennbaren - innenliegenden elektrischen Spule den Eisenkern 6 isoliert durchdringen, in dem die hierfür vorgesehenen Durchbrüche im Eisenkern 6 mit der Vergussmasse ausgefüllt sind, die gleichzeitig auch der Befestigung der innenliegenden elektrischen Spule mit dem Eisenkern 6 dient. Somit entspricht diese Darstellung der erstgenannten Ausführungsform im Rahmen der Figurenbeschreibung. Bei der anderen hier genannten Ausführungsform der Erfindung erfolgt dem gegenüber ein großflächiges Vergießen des Eisenkerns, so dass die Verbindung zum Rückflussmantel und zur innenliegenden elektrischen Spule 5 allein über die Vergussmasse hergestellt wird, die gleichzeitig auch die Isolierung für die nach außen dringenden Anschlusspins 12a und 12b bildet.

Die Erfindung beschränkt sich nicht auf die vorstehend beschriebenen bevorzugten Ausführungsbeispiele. Es sind vielmehr auch Abwandlungen hiervon denkbar, welche vom Schutzbereich der nachfolgenden Ansprüche Gebrauch machen. So ist es beispielsweise auch möglich, die über die elektromagnetische Spulenanordnung betätigte Ventilmechanik anders auszubilden, beispielsweise als 2/2-Ventil.

### Bezugszeichenliste

- 1: Ventilgehäuse
- 2: elektromagnetische Spulenanordnung
- 3: Ventilsitz
- 4: Verschlusselement mit Betätigungsstößel
- 5: Spule
- 6: Eisenkern
- 7: Anker
- 8: Rückflussmantel
- 9: Flussleitblech
- 10: Luftspalt
- 11: Rückstellfeder
- 12: Anschlusspin

- P: Speisedruckanschluss
- A: Arbeitsleistungsanschluss
- R: Entlüftungsanschluss

## Patentansprüche

1. Elektropneumatisches Patronenventil mit einem äußere Anschlüsse (P, A, R) aufweisenden Ventilgehäuse (1) mindestens einem Ventilsitz (3a, 3b), der ein Verschlusselement (4) über eine elektromagnetische Spulenanordnung betätigt, umfassend eine elektrische Spule (5) mit Eisenkern (6), der mit einem mit dem Verschlusselement (4) in Verbindung stehenden Anker (7) zusammenwirkt, welcher über einen Luftspalt (10) von einem Flussleitblech (9) umgeben ist, wobei der magnetische Fluss zum Eisenkern (6) hin über einen Rückflussmantel (8) geschlossen ist,
**dadurch gekennzeichnet, dass** der Eisenkern (6) mit dem Rückflussmantel (8) verschweißt oder verklebt ist, wobei stirnseitig angeordnete elektrische Anschlusspins (12a, 12b) der elektrischen Spule (5) den Eisenkern (6) isoliert durchdringend über eine Vergussmasse hieran befestigt sind.

2. Elektropneumatisches Patronenventil nach Anspruch 1,
**dadurch gekennzeichnet, dass** das aus Kunststoff bestehende Ventilgehäuse (1) in den eisenmetallischen zylinderartigen Rückflussmantel (8) eingepresst ist.

3. Elektropneumatisches Patronenventil nach Anspruch 2,
**dadurch gekennzeichnet, dass** der Rückflussmantel (8) derart topfförmig ausgebildet ist, das sich über einen nach radial innen gerichteten Randbereich ein Anschlag für das einzusteckende Ventilgehäuse (1) bildet.

4. Elektropneumatisches Patronenventil nach Anspruch 1,
**dadurch gekennzeichnet, dass** der Anker (7) in einem spindelartigen Spulenkörper der elektrischen Spule (5) axial geführt ist.

5. Elektropneumatisches Patronenventil nach Anspruch 1,
**dadurch gekennzeichnet, dass** der Anker (7) durch das Flussleitblech (9) axial geführt ist, welches sich in den Innenraum der elektrischen Spule (5) hinein erstreckt.

6. Elektropneumatisches Patronenventil nach einem der vorstehenden Ansprüche,
**dadurch gekennzeichnet, dass** zur Bildung eines 3/2-Ventils im Ventilgehäuse (1) genau zwei in Betätigungsrichtung einander gegenüberliegende Ventilsitze (3a, 3b) vorgesehen sind, welche über das Verschlusselement (4) wechselseitig betätigbar sind.

7. Verfahren zur Montage eines elektropneumatischen Patronenventils nach einem der vorsehenden Ansprüche,
**gekennzeichnet durch** die folgenden Montageschritte:
- in den topfförmigen Rückflussmantel (8) wird das Ventilgehäuse (1) mit Verschlusselement (4) eingelegt,
- darüber wird das Flussleitblech (9) in den topfartigen Rückflussmantel (8) eingelegt,
- darüber wird die elektrische Spule (5) in den topfartigen Rückflussmantel (8) eingelegt,
- in den Innenraum der elektrischen Spule (5) wird der Anker (7) eingelegt, so dass dieser am Verschlusselement (4) zur Anlage kommt,
- auf dem Anker (7) wird eine nach Art einer Druckfeder ausgebildete Rückstellfeder (11) in den Innenraum der elektrischen Spule (5) eingelegt,
- darüber wird als Deckel der Eisenkern (6) in den topfartigen Rückflussmantel (8) eingelegt und **durch** Verschweißen oder Verkleben befestigt.

8. Verfahren nach Anspruch 7,
**dadurch gekennzeichnet, dass** die den Eisenkern (6) isoliert durchdringenden Anschlusspins (12a, 12b) der elektrischen Spule (5) im Bereich des Eisenkerns (6) mit Vergussmasse abgedichtet werden, wobei gleichzeitig der Eisenkern (6) innenseitig ringförmig mit der elektrischen Spule (5) verklebt wird.

9. Verfahren nach Anspruch 8,
**dadurch gekennzeichnet, dass** gleichzeitig auch der Eisenkern (6) durch die Vergussmasse mit dem Rückflussmantel (8) verklebt wird, derart, dass der Eisenkern (6) außenseitig von der Vergussmasse überdeckt wird.

10. Verfahren nach Anspruch 8 oder 9,
**dadurch gekennzeichnet, dass** der Eisenkern (6) nach Justage des Ankerhubes durch Verschweißen oder Verkleben befestigt wird.
